# EUROPÄISCHE PATENTSCHRIFT

(11) **EP 2 511 070 B1**
(45) Veröffentlichungstag und Bekanntmachung des Hinweises auf die Patenterteilung: **11.02.2015**
(21) Anmeldenummer: 12162827.5
(22) Anmeldetag: 02.04.2012
(51) Int. Cl.: B29C 49/56, B29C 49/46

(54) **Vorrichtung und Verfahren zum Umformen von Kunststoffvorformlingen zu Kunststoffbehältnissen mit gekoppelten Schwenk- und Verriegelungsbewegungen**
Device and method for moulding plastic preforms into plastic containers with coupled pivoting and locking movements
Dispositif et procédé de transformation de préformes en matière synthétique en récipients en plastique avec mouvements couplés de verrouillage et d'oscillation

(30) Priorität: 13.04.2011 DE 102011016854
(43) Veröffentlichungstag der Anmeldung: 17.10.2012
(73) Patentinhaber: Krones AG, 93073 Neutraubling (DE)
(72) Erfinder: Geltinger, Florian, 93093 Donaustauf (DE); Neubauer, Michael, 83236 Übersee (DE)
(74) Vertreter: Bittner, Bernhard

(56) Entgegenhaltungen:
- EP-A1- 1 473 139
- EP-A1- 1 535 719
- EP-A1- 2 246 176
- WO-A2-2010/069808
- DE-A1-102007 022 638
- US-B2- 7 341 443

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei werden üblicherweise in einer Vielzahl von Blasstationen Kunststoffvorformlinge durch Beaufschlagung mit Druckluft zu Kunststoffbehältnissen umgeformt. Im Rahmen des Expansionsvorgangs findet eine Menge von nebeneinander ablaufenden Bewegungsvorgängen statt. So werden üblicherweise die Blasformträgerhälften auseinandergeklappt, um einen Kunststoffvorformling einzubringen und anschließend zusammengeklappt, um den Expansionsprozess durchführen zu können. Nach Beendigung des Expansionsvorgangs werden die Blasformträgerteile wieder auseinandergeklappt, um so das fertig geblasene Kunststoffbehältnis entnehmen zu können. In dem geschlossenen Zustand der Blasformträgerteile, insbesondere während des Expansionsvorgangs, werden dabei zusätzlich die Blasformträgerteile miteinander verriegelt, um so den nicht unerheblichen Drücken standhalten zu können.

Weiterhin sind aus dem Stand der Technik sterile Anwendungen bekannt, bei denen die einzelnen Blasstationen innerhalb eines Reinraums geführt werden. So wird beispielsweise in der WO 2010/020529 A2 eine Vorrichtung zum Umformen von Kunststoffvorformlingen zu Kunststoffbehältnissen beschrieben, welche eine mehrere Blasstationen umfassende Transporteinrichtung und einen Reinraum aufweist.

Mittels des Reinraums können aseptische Bedingungen bei der Herstellung der Kunststoffbehältnisse und auch bei deren Abfüllung mit Getränken gewährleistet werden (vergleiche dazu den Oberbegriff der Ansprüche 1 und 11).

In einigen Ländern werden für derartige aseptische Behandlungen Richtlinien aufgestellt. So werden beispielsweise in den USA derartige Richtlinien seitens der FDA (Food and Drug Administration) aufgestellt und überwacht.

Die WO 2010/069808 A2 beschreibt eine Blasform. Dabei werden verschiedene Antriebsbzw. Kopplungsmechanismen für eine Verriegelung dieser Blasform dargestellt.

Die EP 2 246 B1 beschreibt eine Vorrichtung zur Herstellung von Behältern aus Vorformlingen. Dabei wird eine Blasformmaschine für eine aseptische Füllanlage dargestellt.

Wie oben erwähnt, ist eine wichtige Komponente einer Blasstation jeweils der Verriegelungsmechanismus, der während des Blasvorgangs die beiden Formträgerhälften miteinander verbindet bzw. verriegelt. Nach Beendigung des Blasvorgangs öffnet sich die Verriegelung. Die Flasche kann nach dem Öffnen der Form entnommen und ein neuer Vorformling eingebracht werden. Im Stand der Technik weist dieser Verriegelungsmechanismus üblicherweise eine Verriegelungswelle auf, die in einem der beiden Formträger gelagert ist. Mehrere über die Höhe des Formträgers verteilte Lagerstellen gewährleisten eine gleichmäßige Kraftverteilung in den Bauteilen. Dies ist wichtig, da die Verriegelung eine Haltekraft von mehreren 10.000 N aufnehmen muss. Der Verriegelungsvorgang besteht beispielsweise aus einer Rotations- oder einer Linearbewegung der Verriegelung. Diese Bewegung wird dabei üblicherweise von einer stationären, am Grundaufbau der Maschine befestigten Kurve erzeugt und über verschiedene Umlenkungen an die Verriegelungswelle weitergeleitet.

Die Öffnungs- und Schließbewegung des Formträgers ist davon unabhängig und separat gesteuert. Da beide Formträgerhälften im Stand der Technik um den gleichen Winkel geöffnet werden, sind sie mechanisch über verschiedene Hebel und Umlenkungen verbunden. Die Ansteuerung erfolgt über eine Kurve. Man benötigt also für die gesamte Ansteuerung zwei Kurven, eine um die beiden Formträgerhälften zu steuern und eine um die Verriegelung zu steuern.

Der vorliegenden Erfindung liegt daher die Aufgabe zugrunde, die Ansteuermechanismen für derartige Blasformmaschinen zu vereinfachen. Dies wird erfindungsgemäß durch eine Vorrichtung nach Anspruch 1 und ein Verfahren nach Anspruch 9 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine an einem beweglichen Träger angeordnete Blasstation auf, wobei diese Blasstation einen Blasformträger zum Halten einer Blasform aufweist und dieser Blasformträger ein erstes Blasformträgerteil und ein zweites Blasformträgerteil aufweist, welches gegenüber dem ersten Blasformträgerteil bezüglich einer vorgegebenen ersten Schwenkachse schwenkbar ist, um die Blasform zu öffnen und zu schließen und wobei die Blasstation weiterhin einen Verriegelungsmechanismus aufweist, um das erste Blasformträgerteil gegenüber dem zweiten Blasformträgerteil zu verriegeln. Weiterhin weist der Verriegelungsmechanismus ein erstes zumindest mittelbar an dem ersten Blasformträgerteil angeordnetes Verriegelungselement und ein zweites zumindest mittelbar an dem zweiten Blasformträgerteil angeordnetes Verriegelungselement auf, wobei in einem verriegelten Zustand der Blasformträgerteile die Verriegelungselemente zusammenwirken und wobei wenigstens das erste Verriegelungselement bezüglich einer zweiten vorgegebenen Achse gegenüber dem Träger bewegbar ist.

Erfindungsgemäß sind die Schwenkbewegungen des ersten Blasformträgerteils und die Bewegungen des ersten Verriegelungselements mittels einer Kopplungseinrichtung derart miteinander gekoppelt, dass sich zumindest zeitweise während einer Bewegung des ersten Verriegelungselements bezüglich der zweiten vorgegebenen Achse die zweite vorgegebene Achse in einer senkrecht zu der zweiten Achse stehenden Richtung gegenüber dem Träger bewegt.

Unter einer zumindest mittelbaren Anordnung des jeweiligen Verriegelungselements an dem Blasformträgerteil wird verstanden, dass dieses Verriegelungselement z.B. direkt an dem jeweiligen Blasformträgerteil angeordnet ist oder beispielsweise an einem weiteren Element oder Bauteil, gegenüber dem auch das jeweilige Blasformträgerteil (orts-)fest angeordnet ist. So könnte etwa ein Verriegelungselement fest gegenüber dem Träger angeordnet sein und das diesem zugeordnete Blasformträgerteil ebenfalls fest gegenüber dem Träger angeordnet sein.

Dabei ist es denkbar, dass ein Verriegelungselement starr gegenüber dem jeweiligen Blasformträgerteil angeordnet ist und das andere definiert bewegbar, z.B. schwenkbar. Vorteilhaft ist jedoch wenigstens ein Verriegelungselement unmittelbar an dem ihm zugeordneten Blasformträgerteil angeordnet und besonders bevorzugt sind beide Verriegelungselemente jeweils an den ihnen zugeordneten Blasformträgerteilen angeordnet.

Bei einer weiteren vorteilhaften Ausführungsform ist die zweite vorgegebene eine Schwenkachse und das erste Verriegelungselement ist gegenüber dieser bevorzugt stationär gegenüber dem ersten Blasformträgerteil angeordneten zweiten Schwenkachse schwenkbar.

Vorteilhaft bewegt sich mit dieser (Schwenk)achse auch das genannte erste Verriegelungselement, welches wie oben erwähnt, vorteilhaft schwenkbar bezüglich der besagten Schwenkachse angeordnet ist. Vorteilhaft handelt es sich bei dem beweglichen Träger um einen drehbaren Träger, wie beispielsweise ein Blasrad. Bei einer weiteren vorteilhaften Ausführungsform ist an diesem Träger eine Vielzahl von derartigen Blasstationen angeordnet.

Bei einer weiteren vorteilhaften Ausführungsform ist das erste Verriegelungselement entlang der Achse bewegbar. Bei dieser Ausführungsform könnte es sich bei dem ersten Verriegelungselement um einen stangenartigen oder bolzenartigen Körper handeln, der in seiner Längsrichtung verschoben wird, um beispielsweise in entsprechende Ausnehmungen oder hülsenartige Körper zum Zweck der Verriegelung einzugreifen.

Bei einer weiteren vorteilhaften Ausführungsform handelt es sich bei der Kopplungseinrichtung, welche die (Schwenk-)bewegung des ersten Blasformträgerteils und des ersten Verrieglungselements miteinander koppelt, um eine mechanische Kopplungseinrichtung, d.h. die beiden genannten Schwenkbewegungen und die Verschiebebewegungen sind mechanisch miteinander gekoppelt. Damit werden vorteilhaft die Schwenkbewegung des Verriegelungselements und die Schwenkbewegung des ersten Blasformträgerteils durch einen gemeinsamen Mechanismus miteinander gekoppelt.

Bei einer weiteren vorteilhaften Ausführungsform weist die Vorrichtung einen mit wenigstens einer Wandung gegenüber einer Umgebung abgetrennten Reinraum auf, innerhalb dessen die Blasstation bewegt wird. Diese Ausführungsform ist insbesondere für eine aseptische Blasmaschine relevant, bei der die Blasstation innerhalb des besagten Reinraums transportiert wird. Bei einer vorteilhaften Ausführungsform wird dabei der Reinraum wenigstens teilweise auch durch den besagten Träger ausgebildet. So kann der Träger vorteilhaft ein C-förmiges Außenprofil haben, innerhalb dessen wenigstens teilweise die einzelnen Blasstationen angeordnet sind. Vorteilhaft ist die oben genannte Kopplungseinrichtung außerhalb des Reinraums angeordnet, beispielsweise unterhalb des Reinraums.

Bei einer weiteren vorteilhaften Ausführungsform ist auch das zweite Blasformträgerteil bezüglich einer vorgegebenen Schwenkachse schwenkbar. Bei einer besonders vorteilhaften Ausführungsform werden das erste Formträgerteil und das zweite Formträgerteil um eine gemeinsame geometrische Achse geschwenkt. Es wäre jedoch auch möglich, dass die Schwenkachse, um welche das erste Blasformträgerteil geschwenkt wird, parallel ist zu der Schwenkachse, um welche das zweite Blasformträgerteil geschwenkt wird. Vorteilhaft verlaufen diese Schwenkachsen parallel zu einer Längsrichtung des zu expandierenden Kunststoffvorformlings.

Bei einer weiteren vorteilhaften Ausführungsform ist das erste Blasformträgerteil um einen ersten vorgegebenen Schwenkwinkel schwenkbar und das zweite Blasformträgerteil ist um einem zweiten vorgegebenen Schwenkwinkel schwenkbar und der zweite Schwenkwinkel ist größer als der erste Schwenkwinkel.

Bei den meisten bekannten Blasmaschinen, insbesondere Streckblasmaschinen, werden beide Formträgerhälften etwa um den gleichen Winkel geöffnet (aufgeschwenkt), um die Flasche entnehmen bzw. den Kunststoffvorformling einbringen zu können. Es kann jedoch manchmal auch sinnvoll sein, die nötige Öffnungsbewegung der Formträger (stark) asymmetrisch zu gestalten. In diesem Fall, der hier bevorzugt ist, schwenkt eine Formträgerhälfte wesentlich weiter auf als die andere. Hier erfolgt vorteilhaft eine Ansteuerung der beiden Formträgerhälften getrennt.

Damit wird die Blasform unsymmetrisch geöffnet und vorteilhaft dient die Bewegung des ersten Blasformträgerteils lediglich zum Lösen eines Bodenteils der Blasform und die Bewegung des zweiten Blasformträgerteils zum Entnehmen der Kunststoffbehältnisse. Vorteilhaft wird dabei das erste Blasformträgerteil um einen Winkel geschwenkt, der zwischen 1 ° und 10°, bevorzugt zwischen 1 ° und 8°, bevorzugt zwischen 2° und 6° und besonders bevorzugt zwischen 2° und 4° liegt.

Bevorzugt ist in bzw. an dem Blasformträgerteil, welches um den geringeren Winkel geschwenkt wird, auch die Verriegelungswelle gelagert. Diese muss nach dem Schließen der beiden Formhälften eine Rotationsbewegung ausführen und so die beiden Blasformträger verriegeln.

Vorteilhaft wird das zweite Blasformträgerteil um einen Winkel geschwenkt, der zwischen 20° und 60°, bevorzugt zwischen 30° und 50°, bevorzugt zwischen 35° und 45° und besonders bevorzugt bei etwa 40° liegt. Vorteilhaft erstreckt sich eine die Schwenkachse definierende Schwenkwelle durch eine Wandung, welche insbesondere auch den Reinraum begrenzt und die Bewegungen der Schwenkwelle sind besonders bevorzugt mittels einer Dichtungseinrichtung abgedichtet.

Zu diesem Zweck weist die besagte Wandung vorteilhaft eine Durchführöffnung auf, durch welche sich die Schwenkwelle erstreckt. Dabei ist die Schwenkwelle gegenüber dieser Öffnung vorteilhaft nicht nur drehbar, sondern auch senkrecht zu der besagten Achse bewegbar. Vorteilhaft ist dabei die Dichtungseinrichtung einerseits an der Welle angeordnet und andererseits an der besagten Wandung. Dabei ist diese Dichtungseinrichtung vorteilhaft in der Lage, sowohl Rotationsbewegungen um einen vorgegebenen Winkel als auch (Verschiebe-)bewegungen der Schwenkwelle in einer senkrecht zu der Schwenkwelle stehenden Richtung aufzunehmen. Vorteilhaft ist die Dichtungseinrichtung aus einem Kunststoff hergestellt. Vorteilhaft ist die Schwenkwelle entlang eines gekrümmten Pfades gegenüber dem Träger bewegbar.

Bei einer weiteren vorteilhaften Ausführungsform weist die Kopplungseinrichtung einen Hebel zum Schwenken des Blasformträgerteils bezüglich der zweiten Schwenkachse auf. Dieser Hebel erstreckt sich dabei vorteilhaft zumindest teilweise in einer senkrecht zu der Schwenkwelle stehenden Richtung. An diesen Hebel kann dabei beispielsweise eine Kurvenrolle angeordnet sein, welche mit einer insbesondere stationär angeordneten Führungskurve zusammenwirken kann.

Es wären jedoch auch andere Antriebsarten denkbar, wie beispielsweise Elektromotoren, pneumatische Antriebe, hydraulische Antriebe und dergleichen.

Bei einer weiteren vorteilhaften Ausführungsform weist die Kupplungseinrichtung einen drehfest an einer die Schwenkachse definierenden Schwenkwelle angeordneten Hebelarm auf, der gelenkig mit einem weiteren Schwenkarm verbunden ist. Durch diese gelenkige Ausbildung ist eine Kopplung zwischen der Schwenkbewegung des Verriegelungselements und der Verschiebebewegung der Schwenkwelle bzw. Schwenkachse selbst, insbesondere entlang einer kreisförmigen Bahn, möglich. Vorteilhaft wird daher die Schwenkwelle für den Verriegelungsmechanismus entlang einer kreisförmigen Bahn verschoben, wobei sich diese kreisförmige Bahn wiederum durch die Schwenkbewegung des ersten Blasformträgerteils ergibt.

Die vorliegende Erfindung ist weiterhin auf ein Verfahren zum Umformen von Kunststoffvorformlingen zu Kunststoffbehältnissen gerichtet, wobei der Kunststoffvorformling in einer an einem beweglichen Träger angeordneten Blasstation zu dem Kunststoffbehältnis umgeformt wird und wobei die Blasstation ein erstes bezüglich einer ersten Schwenkachse schwenkbares Blasformträgerteil und eine zweites Blasformträgerteil aufweist und wobei das erste Blasformträgerteil und das zweite Blasformträgerteil bezüglich einander mittels eines Verriegelungsmechanismus verriegelt werden und wobei zum Verriegeln der Blasformträgerteile ein erstes Verriegelungselement eine Bewegung bezüglich einer zweiten Achse ausführt.

Erfindungsgemäß bewegt sich zumindest zeitweise die zweite Achse während der Bewegung des ersten Verriegelungselements in einer senkrecht zu der zweiten Achse stehenden Richtung gegenüber dem Träger. Vorteilhaft bewegt sich die zweite Achse gegenüber dem Träger entlang einer kreissegmentförmigen Bahn. Vorteilhaft fallen die Bewegung des ersten Verriegelungselements und die Bewegung der zweiten Achse zeitlich vollständig zusammen.

Vorteilhaft führt das erste Verriegelungselement eine Schwenkbewegung bezüglich einer vorgegebenen Schwenkachse aus. Bei einer weiteren vorteilhaften Ausführungsform wäre es jedoch auch denkbar, dass das erste Verriegelungselement eine Bewegung entlang der besagten Achse (d.h. insbesondere eine geradlinige Bewegung) ausführt.

Vorteilhaft werden die (Schwenk)bewegung des Verriegelungselements sowie die Verschiebebewegung der Schwenkachse mittels einer Kopplungseinrichtung miteinander gekoppelt. Bei einem weiteren vorteilhaften Verfahren erreichen das erste Blasformträgerteil und das zweite Blasformträgerteil während eines Öffnungsvorgangs der Blasstation ihre jeweiligen Öffnungsstellungen zu unterschiedlichen Zeitpunkten erreichen. Um dies zu erreichen wäre es beispielsweise möglich, die Bewegungen des ersten Blasformträgerteils und des zweiten Blasformträgerteils mit voneinander unabhängigen Antriebseinrichtungen auszulösen. Der Vorteil dieser Ausgestaltung liegt darin, dass ein Boden der Blasformen schon wegbewegt werden kann, sobald die rechte Hälfte (bzw. dasjenige Blasformträgerteil, welches eine geringere Schwenkbewegung ausführt) in ihrer Endposition ist. Die linke Hälfte bzw. das andere Blasformträgerteil kann sich gleichzeitig noch in ihrer Öffnungsbewegung befinden.

Auf diese Weise können die Öffnungszeiten verringert werden. Entsprechend wäre es auch für die Schließvorgang der Blasform möglich, dass sich zunächst nur ein Blasformträgerteil bewegt und erst kurz vor erreichen der Schließposition beide Blasformträgerteile.

Weitere Vorteile und Ausführungsformen ergeben sich aus den beigefügten Zeichnungen: Darin zeigen:
- Fig. 1: eine schematische Darstellung einer Anlage zum Herstellen von Kunststoffbehältnissen;
- Fig. 2: eine Ansicht eines Reinraums im Bereich einer Blasstation,
- Fig. 3a: eine Blasstation nach dem Stand der Technik;
- Fig. 3b: eine Detaildarstellung der in Fig. 3a bezeichneten Vorrichtung;
- Fig. 4: eine schematische Darstellung einer erfindungsgemäßen Blasstation;
- Fig. 5a: die Blasstation aus Fig. 4 in einem geschlossenen Zustand;
- Fig. 5b: die Blasstation aus Fig. 4 in einem halb geöffneten Zustand;
- Fig. 5c: die Blasstation aus Fig. 4 in einem geöffneten Zustand; und
- Fig. 6: eine weitere Draufsicht auf eine Blasstation in einem geöffneten Zustand.

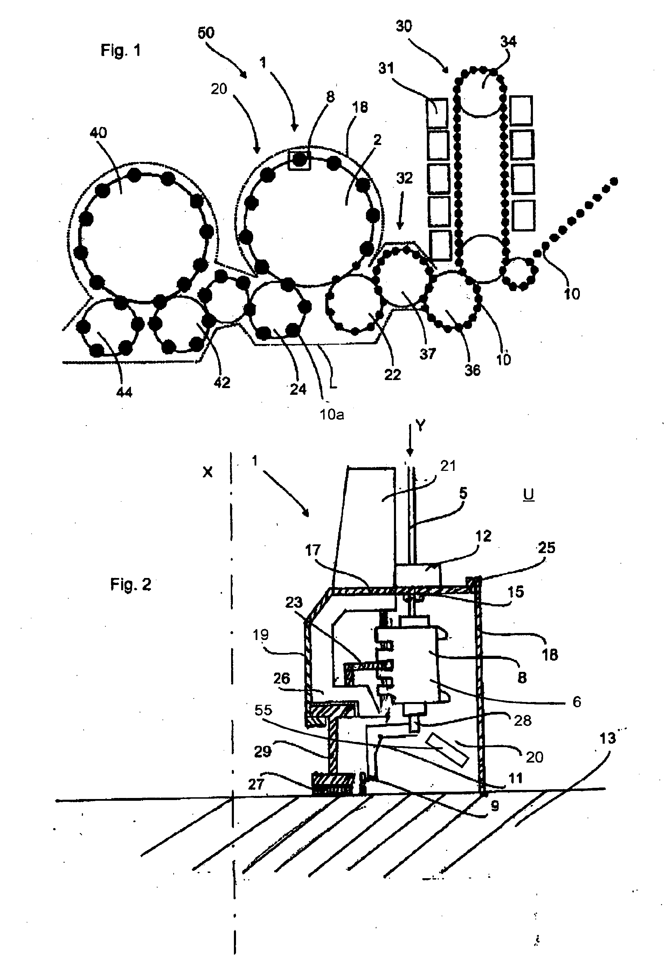

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist. Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

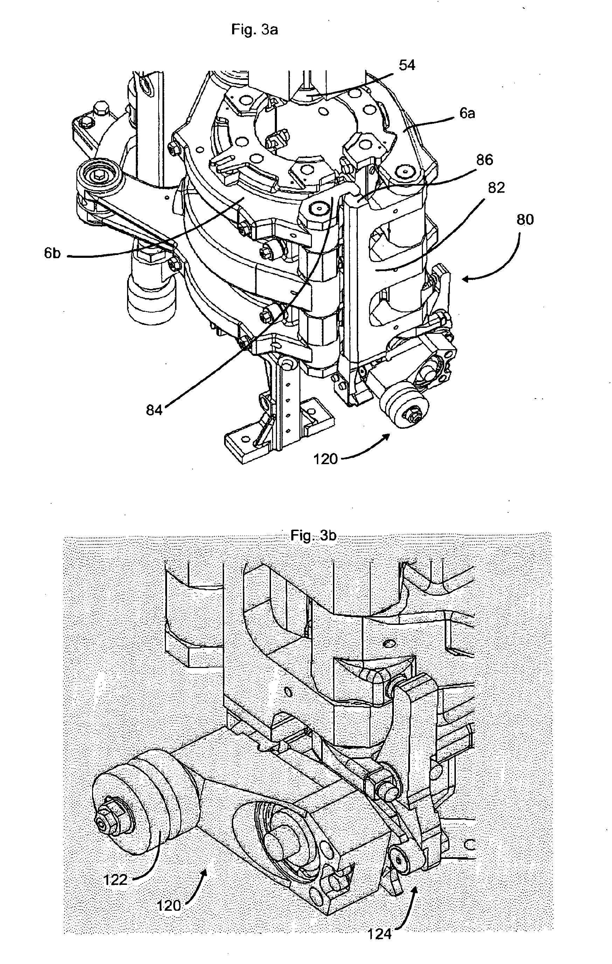

Figur 3a zeigt eine Blasstation nach dem Stand der Technik. Diese Blasstation weist dabei ein erstes Blasformträgerteil 6a und ein zweites Blasformträgerteil 6b auf, die geöffnet und geschlossen werden können. Das Bezugszeichen 54 kennzeichnet eine Blasdüse zum Expandieren der Kunststoffvorformlinge.

An dem ersten Blasformträgerteil 6a ist ein erstes Verriegelungselement 82 schwenkbar angeordnet. An dem zweiten Blasformträgerteil 6b ist ein zweites Verriegelungselement 84 angeordnet. In einem geschlossenen Zustand greift das erste Verriegelungselement 82 mit einem Eingriffsabschnitt 86 in das zweite Verriegelungselement 84 ein.

Das Bezugszeichen 120 kennzeichnet einen Betätigungsmechanismus zum Bewegen des Verriegelungselements.

Figur 3b zeigt eine Detaildarstellung der in Figur 3a gezeigten Vorrichtung. Man erkennt, dass der Betätigungsmechanismus 120 eine Kurvenrolle 122 aufweist, welche gegenüber einer (nicht gezeigten) Führungskurve abrollt. Das Bezugszeichen 124 kennzeichnet schematisch einen Einrastmechanismus, der bewirkt, dass das Verriegelungselement entweder in der geschlossenen oder in der geöffneten Stellung einrastet.

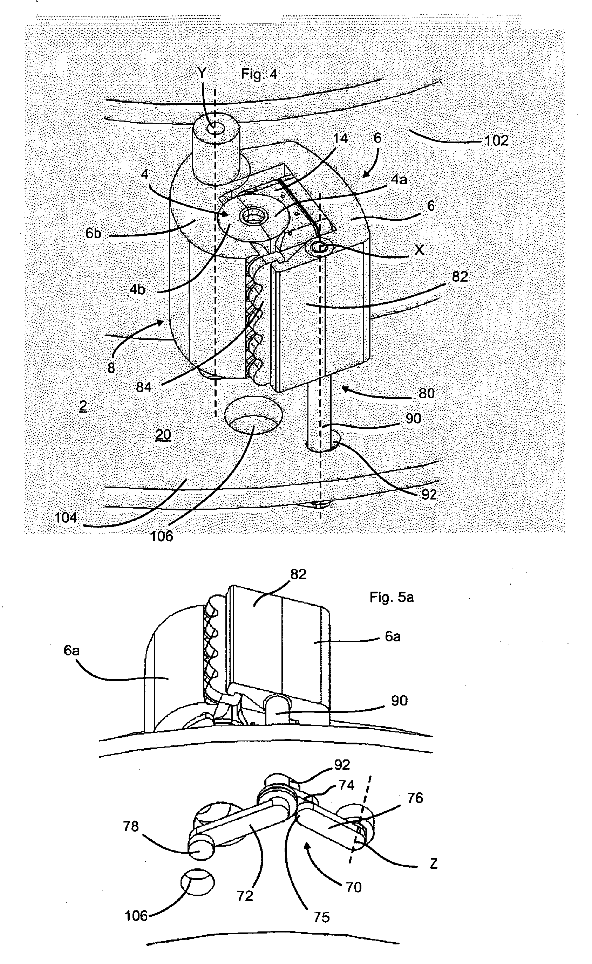

Figur 4 zeigt eine erfindungsgemäße Blasstation 8. Diese Blasstation 8 ist dabei an dem Träger 2 angeordnet. Der Träger 2 weist dabei eine innere Wandung 102 auf, welche gleichzeitig eine Begrenzung des Reinraums ausbildet. Diese Wandung 102 weist dabei einen kreisförmigen Außenumfang auf.

Das Bezugszeichen 104 bezieht sich auf eine Bodenwandung des Trägers 2, welche ebenfalls eine Grenze des Reinraums 20 ausbildet. In dieser Bodenwandung 104 ist eine Öffnung 106 angeordnet, durch welche hindurch eine Mechanik geführt werden kann, mit der eine Bodenform (nicht gezeigt) an die Blasform herangeführt werden kann.

Die Blasform 4 weist zwei Blasformteile 4a und 4b auf, welche in einem zusammengeklappten Zustand einen Hohlraum ausbilden, innerhalb dessen die Kunststoffvorformlinge durch Beaufschlagung mit einem Fluid, z.B. Druckluft expandiert werden.

Das Blasformteil 4a ist dabei mittels einer Trägerschale 14 an einem ersten Blasformträgerteil 6a angeordnet. Dabei kann ein (nicht gezeigtes) Druckkissen vorgesehen sein, welches es ermöglicht, dass bei Beaufschlagung mit Druckluft das Blasformteil 4a auf das zweite Blasformteil 4b zugespannt wird.

Das zweite Blasformteil 4b ist an einem zweiten Blasformträgerteil 6b angeordnet. Dieses zweite Blasformträgerteil 6b ist bezüglich einer ersten Schwenkwelle Y schwenkbar, um die Blasform zu öffnen und zu schließen.

Eine Schwenkwelle zum Schwenken des Blasformträgerteils 6b kann dabei beispielsweise gegenüber dem Träger 2 gelagert sein, wobei vorteilhaft entsprechende Lagereinrichtungen außerhalb des Reinraums angeordnet sind.

An dem zweiten Blasformträgerteil 6b ist ein zweites Verriegelungselement 84 angeordnet. An dem ersten Blasformträgerteil 6a ist ein erstes Verriegelungselement 82 angeordnet, welches bezüglich einer zweiten Schwenkachse X schwenkbar ist. Zum Schwenken dieses ersten Verriegelungselements 82 ist eine Schwenkwelle 90 vorgesehen, welche bezüglich einer zweiten Schwenkachse X schwenkbar ist. Dabei erstreckt sich diese Schwenkwelle 90 hier durch eine Öffnung 92, die in der Wand 104 angeordnet ist, hindurch. Das Bezugszeichen 80 kennzeichnet den Verriegelungsmechanismus in seiner Gesamtheit.

Die Figuren 5a bis 5c zeigen drei Darstellungen in unterschiedlichen Öffnungsstellungen einer erfindungsgemäßen Blasstation 8. Bei der in Figur 5a gezeigten Situation ist die Blasform geschlossen und verriegelt. Unterhalb der Wand 104 und damit bevorzugt auch außerhalb des Reinraums ist eine in ihrer Gesamtheit mit 70 gekennzeichnete Kopplungseinrichtung vorgesehen, welche eine Schwenkbewegung des ersten Verriegelungselements 82 mit einer Schwenkbewegung des ersten Blasformträgerteils 6a koppelt. Das Bezugszeichen 72 kennzeichnet einen Schwenkhebel, an dem eine Kurvenrolle 78 angeordnet ist, mit der ein Schwenken der Schwenkwelle 90 erreicht wird.

Durch ein Schwenken des Hebels 72 wird gleichzeitig auch ein Arm 74 geschwenkt, der gelenkig mit einem weiteren Arm 76 verbunden ist. Das Bezugszeichen 75 kennzeichnet dabei grob eine entsprechende Gelenkverbindung zwischen den Armen 74 und 76. Durch ein Schwenken des Arms 74 wird auch die Schwenkwelle 90 gegenüber der Öffnung 92 bewegt bzw. in einer senkrecht zu der Drehachse X stehenden Richtung verschoben. Genauer gesagt wird die Schwenkwelle 90 entlang eines kreissegmentförmigen Pfades bewegt.

Der Hebel 76 ist schwenkbar bezüglich einer dritten Schwenkachse Z an einer Halteeinrichtung und damit vorteilhaft an der Wand 104 angeordnet.

In den beigefügten Figuren ist nur eine derartige Blasstation dargestellt. Üblicherweise befinden sich mehrere dieser Blasstationen an einen vorteilhaft rotierenden Karussell. Wie in den Figuren 4 und 5a bis 5c erkennbar, ist das erste Trägerteil über die Hauptwelle gelagert. In dem ersten Formträgerteil ist wiederum die Verriegelungswelle drehbar gelagert. An dieser Verriegelungswelle 90 sind wiederum Haken 86 angeordnet, die bei geschlossener Verriegelung mit einem entsprechenden Verriegelungshaken des zweiten Blasformträgerteils 6b zusammenwirken bzw. in Eingriff sind. Wie erwähnt ist die Kurvenrolle bzw. Ansteuerungsrolle 78 über den Hebel 72 ebenfalls mit der Verriegelungswelle 90 verbunden. Die Kurvenrolle befindet sich dabei in der Maschine vorteilhaft unterhalb der beiden Blasformträgerteile 6a und 6b.

Bei dem Öffnungsvorgang wird bei einem drehenden Karussell die Kurvenrolle 78 von einer (insbesondere stationär angeordneten) Kurve angesteuert. Dabei dreht sich die Verriegelungswelle 90 entgegen dem Urzeigersinn. Auf diese Weise wird die Verriegelung zwischen dem ersten Verriegelungselement 82 und dem zweiten Verriegelungselement 84 gelöst. Vorteilhaft ist die Geometrie der Hebelanordnung so gewählt, dass sich zunächst das erste Verriegelungselement nahezu ausschließlich nach vorne bewegt, d.h. vom Zentrum der Station weg und anschließend rasch nach rechts, um das erste Blasformträgerteil 6a schnell zu öffnen.

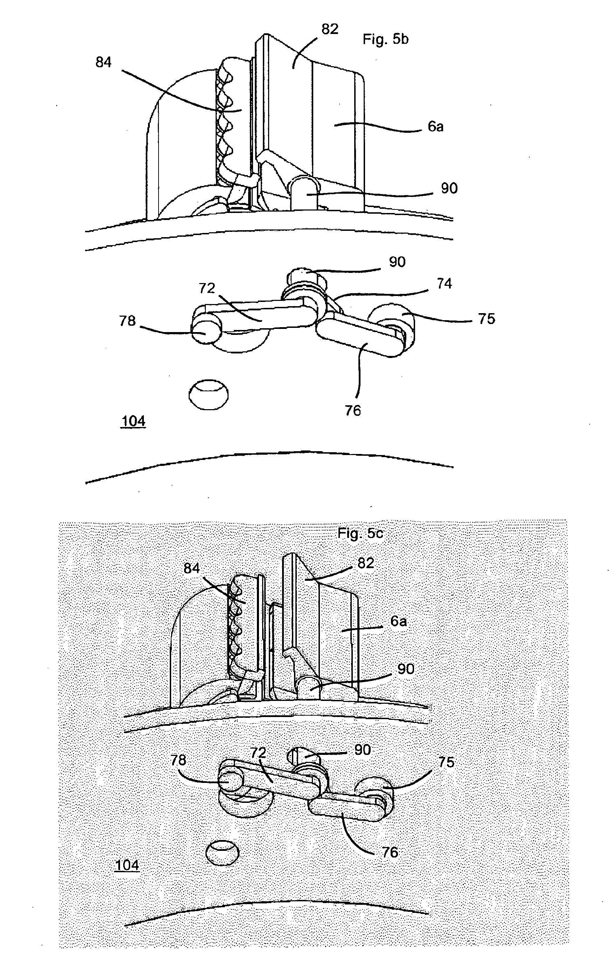

Diese Situation ist in Figur 5b gezeigt, welche einen halb geöffneten Zustand zeigt. Dabei ist das erste Verriegelungselement bereits außer Eingriff mit dem zweiten Verriegelungselement 84 und die Verriegelungswelle 90 hat sich gegenüber der Öffnung 92 erst geringfügig bewegt.

Wird die Kurvenrolle 78 weiterbewegt, so dreht sich die Verriegelungswelle 90 auch noch weiter entgegen dem Urzeigersinn. Durch den Hebel 74 bzw. das Verriegelungsgelenk 75 schwenkt das gesamte Blasformträgerteil 6a entgegen dem Urzeigersinn auf. Diese Situation ist in Figur 5c gezeigt. Die Weite der jeweiligen Öffnungsbewegung lässt sich durch eine geschickte Wahl der Längen des Elements 74 und des Elements 76 den Erfordernissen anpassen. Das Schließen und Verriegeln der Blasstation erfolgt in umgekehrter Reihenfolge. Bei der in Fig. 5c gezeigten Situation ist zur besseren Veranschaulichung das linke Blasformträgerteil 6b in einem geschlossenen Zustand gezeigt. Tatsächlich wäre zu diesem Zeitpunkt dieses Blasformträgerteil weit aufgeklappt.

Der Vorteil dieser Konstruktion liegt darin, dass zwei Bewegungen, nämlich die Bewegungen des ersten Blasformträgerteils und der Verriegelungswelle mit nur einer Kurve gesteuert werden können. Außerdem ist es möglich, die Bewegungen der beiden Formträgerteile unabhängig voneinander auszuführen. Dabei kann zum Beispiel auch die Bewegung des Formträgerteils 6a früher enden als die Bewegung des zweiten Formträgerteils 6b. Dies ist im Stand der Technik durch eine üblicherweise starre Kopplung der beiden Formträgerteile nicht möglich.

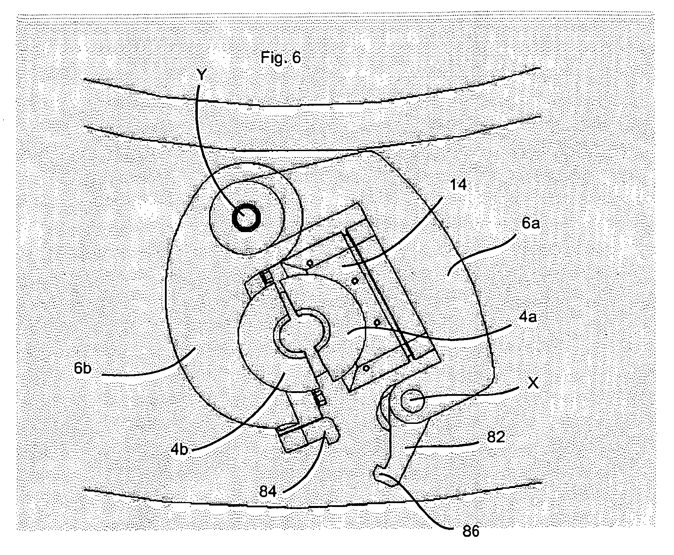

Figur 6 zeigt eine weitere Draufsicht auf eine erfindungsgemäße Blasstation. Bei dieser Situation ist sowohl das Verriegelungselement 82 geöffnet als auch das erste Blasformträgerteil 6a geöffnet und damit auch die Blasform geöffnet. Aus Gründen der Anschaulichkeit wurde das zweite Blasformträgerteil 6b hier noch geschlossen dargestellt. In der Praxis wäre dieses Blasformträgerteil jedoch zu einem entsprechenden Zeitpunkt bereits weit geöffnet, um so beispielsweise ein fertig geblasenes Behältnis entnehmen oder auch einen Kunststoffvorformling einführen zu können.

Es wird daher vorgeschlagen, dass die Bewegung eines oder mehrerer Formträgerteile und die Bewegungen der Verriegelungswelle über einen oder mehrere Hebel bzw. Verbindungsgelenke oder sonstige Maschinenelemente miteinander (insbesondere mechanisch) gekoppelt sind.

Vorteilhaft kann sich ein Blasformträgerteil 6a unabhängig von einem anderen Blasformträgerteil 6b bewegen. Dadurch können die Bewegungen der beiden Blasformträgerteile gleichzeitig oder zu unterschiedlichen Zeitpunkten beginnen sowie gleichzeitig oder zu unterschiedlichen Zeitpunkten enden. In den oben dargestellten Beispielen wäre es sinnvoll, wenn die Bewegungen beider Formträgerteile gleichzeitig starten, aber die Bewegung des ersten Blasformträgerteils 6a früher beendet ist als die Bewegung des zweiten Blasformträgerteils 6b, da hier das zweite Blasformträgerteil 6b eine größere Schwenkbewegung bzw. einen größeren Schwenkwinkel ausführen muss.

Bei einer weiteren vorteilhaften Ausführungsform wäre es auch möglich, dass beide Formträgerteile 6a und 6b und auch die Bewegung der Verriegelungswelle durch eine Ansteuerung erzeugt werden. Dies wäre beispielsweise durch eine entsprechende Verbindung der beiden Formträgerteile im Bereich der Hauptwelle möglich. Durch Betätigung der Ansteuerung könnte dann auch das erste Formträgerteil mitbewegt werden und durch eine Bewegung des ersten Formträgerteils könnte auch das zweite Formträgerteil 6b bewegt werden. Dabei könnte eine Kopplung beispielsweise durch Zahnräder und dergleichen erfolgen.

Die Anmelderin behält sich vor, sämtliche in der Beschreibung genannten Merkmale als erfindungswesentlich zu beanspruchen, sofern diese einzeln oder in Kombination neu gegenüber dem Stand der Technik sind.

### Bezugszeichenliste

- 1: Umformungsvorrichtung
- 2: Transportrad
- 4: Blasform
- 4a, b: Blasformteile
- 5: Reckstange
- 6: Blasformträger
- 6a: erstes Blasformträgerteil
- 6b: zweites Blasformträgerteil
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: Trägerschale
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 54: Blasdüse
- 55: Sterilisationseinrichtung
- 70: Kopplungseinrichtung
- 72: Schwenkhebel
- 74: erster Arm
- 75: Gelenkverbindung
- 76: zweiter Arm
- 78: Kurvenrolle
- 80: Verriegelungsmechanismus
- 82: erstes Verriegelungselement
- 84: zweites Verriegelungselement
- 86: Eingriffsabschnitt
- 90: Schwenkwelle
- 92: Öffnung
- 98: Dichtungseinrichtung
- 102: innere Wandung
- 104: Bodenwandung
- 106: Öffnung
- 120: Betätigungsmechanismus
- 122: Kurvenrolle
- 124: Einrastmechanismus
- L: punktierte Linie
- U: unsterile Umgebung
- X: Schwenkachse
- Y: Schwenkachse
- Z: dritte Schwenkachse

## Patentansprüche

1. Vorrichtung (1) zum Umformen von Kunststoffvorformlingen (10) zu Kunststoffbehältnissen (10a) mit wenigstens einer an einem beweglichen Träger (2) angeordneten Blasstation (8), wobei diese Blasstation (8) einen Blasformträger (6) zum Halten einer Blasform (4a, 4b) aufweist und dieser Blasformträger (6) ein erstes Blasformträgerteil (6a) und ein zweites Blasformträgerteil (6b) aufweist, welches gegenüber dem ersten Blasformträgerteil (6a) bezüglich einer vorgegebenen ersten Schwenkachse (Y) schwenkbar ist, um die Blasform (4a, 4b) zu öffnen und zu schließen und wobei die Blasstation (8) weiterhin einen Verriegelungsmechanismus (80) aufweist, um das erste Blasformträgerteil (6a) gegenüber dem zweiten Blasformträgerteil (6b) zu verriegeln und der Verriegelungsmechanismus(80) ein erstes zumindest mittelbar an dem ersten Blasformträgerteil (6a) angeordnetes, Verriegelungselement (82) und ein zweites zumindest mittelbar an dem zweiten Blasformträgerteil (6b) angeordnetes Verriegelungselement (84) aufweist, wobei in einem verriegelten Zustand der Blasformträgerteile (6a, 6b) die Verriegelungselemente (82, 84) zusammenwirken, wobei wenigstens das erste Vernegelungselement (82) bezüglich einer zweiten vorgegebenen Achse (X) gegenüber dem Träger (2) bewegbar ist.
**dadurch gekennzeichnet, dass**
die Schwenkbewegung des ersten Blasformträgerteils (6a) und die Bewegung des ersten Verriegelungselements (82) mittels einer Kopplungseinrichtung (70) miteinander derart gekoppelt sind dass sich zumindest zeitweise während einer Bewegung des ersten Verriegelungselements (82) bezüglich der zweiten vorgegebenen Achse (X) die zweite vorgegebene Achse (X) in einer senkrecht zu der zweiten Achse (X) stehenden Richtung gegenüber dem Träger (2) bewegt.

2. Vorrichtung (1) nach Anspruch 1,
**dadurch gekennzeichnet, dass**
die Vorrichtung (1) einen mit wenigstens einer Wandung gegenüber einer Umgebung (U) abgetrennten Reinraum (20) aufweist, innerhatb dessen die Blasstation (8) bewegt wird.

3. Vorrichtung nach Anspruch 1,
**dadurch gekennzeichnet, dass**
die zweite vorgegebene Achse (X) eine Schwenkachse (X) ist und das erste Verriegelungselement (82) gegenüber dieser bevorzugt stationär gegenüber dem ersten Blasformträgerteil (6a) angeordneten zweiten Schwenkachse (X) schwenkbar ist.

4. Vorrichtung nach Anspruch 1,
**dadurch gekennzeichnet, dass**
das erste Verriegelungselement (82) entlang der Achse (X) bewegbar ist.

5. Vorrichtung (1) nach Anspruch 2,
**dadurch gekennzeichnet, dass**
die Kopplungseinrichtung (70) außerhalb des Reinraums (20) angeordnet ist.

6. Vorrichtung (1) nach wenigstens einem der vorangegangenen Ansprüche,
**dadurch gekennzeichnet, dass**
das zweite Blasformträgerteil (6b) bezüglich einer vorgegebenen Schwenkachse schwenkbar ist.

7. Vorrichtung (1) nach Anspruch 4,
**dadurch gekennzeichnet, dass**
das erste Blasformträgerteil (6a) um einen ersten vorgegebenen Schwenkwinkel schwenkbar ist und das zweite Blasformträgerteil (6b) um einen zweiten vorgegebenen Schwenkwinkel schwenkbar ist und der zweite Schwenkwinkel größer ist als der erste Schwenkwinkel.

8. Vorrichtung nach wenigstens einem der vorangegangenen Ansprüche,
**dadurch gekennzeichnet, dass**
sich eine die Schwenkachse (X) definierende Schwenkwelle (90) durch eine Wandung erstreckt und die Bewegungen der Schwenkwelle (90) mittels einer Dichtungseinrichtung (98) abgedichtet sind.

9. Vorrichtung (1) nach wenigstens einem der vorangegangenen Ansprüche,
**dadurch gekennzeichnet, dass**
die Kopplungseinrichtung (70) einen Hebel (72) zum Schwenken des Blasformträgerteils bezüglich der ersten Schwenkachse (X) aufweist.

10. Vorrichtung (1) nach wenigstens einem der vorangegangenen Ansprüche,
**dadurch gekennzeichnet, dass**
die Kopplungseinrichtung (70) einen drehfest mit einer die Schwenkachse (X) definierenden Schwenkwelle angeordneten Hebelarm (74) aufweist, der gelenkig mit einem weiteren Schwenkarm (76) angeordnet ist.

11. Verfahren zum Umformen von Kunststoffvorformlingen zu Kunststoffbehältnissen, wobei der Kunststoffvorformling in einer an einem beweglichen Träger angeordneten Blasstation zu dem Kunststoffbehälfnis umgeformt wird und wobei die Blasstation ein erstes bezüglich einer ersten Schwenkachse schwenkbares Blasformträgerteil (6a) und ein zweites Blasformträgerteil (6b) aufweist und wobei das erste Blasformträgerteil (6a) und das zweite Blasformträgerteil (6b) bezüglich einander mittels eines Verriegelungsmechanismus (80) verriegelt werden und wobei zum Verriegeln der Blasformträgerteile (6a, 6b) ein erstes Verriegelungselement (82) eine Bewegung bezüglich einer zweiten Achse (X) ausführt,
**dadurch gekennzeichnet, dass**
sich die zweite Achse (X) während der Bewegung des ersten Verriegelungselements (82) in einer senkrecht zu der zweiten Achse (X) stehenden Richtung gegenüber dem Träger (2) bewegt.

12. Verfahren nach Anspruch 11,
**dadurch gekennzeichnet, dass**
das erste Blasformträgerteil (6a) und das zweite Blasformträgerteil (6b) während eines Öffnungsvorgangs der Blasstation ihre jeweiligen Öffnungsstellungen zu unterschiedlichen Zeitpunkten erreichen.

## Claims

1. Apparatus (1) for transforming plastic preforms (10) into plastic containers (10a), comprising at least one blow moulding station (8) arranged on a movable carrier (2), wherein this blow moulding station (8) comprises a blow mould carrier (6) for holding a blow mould (4a, 4b) and this blow mould carrier (6) comprises a first blow mould carrier part (6a) and a second blow mould carrier part (6b) which is pivotable with respect to the first blow mould carrier part (6a) relative to a predefined first pivot axis (Y) in order to open and close the blow mould (4a, 4b), and wherein the blow moulding station (8) furthermore comprises a lock mechanism (80) for locking the first blow mould carrier part (6a) with respect to the second blow mould carrier part (6b), and the lock mechanism (80) comprises a first lock element (82) arranged at least indirectly on the first blow mould carrier part (6a) and a second lock element (84) arranged at least indirectly on the second blow mould carrier part (6b), wherein the lock elements (82, 84) cooperate in a locked state of the blow mould carrier parts (6a, 6b), wherein at least the first lock element (82) is movable with respect to the carrier (2) relative to a second predefined axis (X), **characterised in that** the pivoting movement of the first blow mould carrier part (6a) and the movement of the first lock element (82) are coupled to one another by means of a coupling device (70) in such a way that, at least at times during a movement of the first lock element (82) relative to the second predefined axis (X), the second predefined axis (X) moves with respect to the carrier (2) in a direction perpendicular to the second axis (X).

2. Apparatus (1) according to claim 1, **characterised in that** the apparatus (1) comprises a clean chamber (20) which is separated from a surrounding environment (U) by at least one wall, inside which the blow moulding station (8) is moved.

3. Apparatus according to claim 1, **characterised in that** the second predefined axis (X) is a pivot axis (X) and the first lock element (82) is pivotable relative to this second pivot axis (X), which is preferably arranged in a stationary manner with respect to the first blow mould carrier part (6a).

4. Apparatus according to claim 1, **characterised in that** the first lock element (82) is movable along the axis (X).

5. Apparatus (1) according to claim 2, **characterised in that** the coupling device (70) is arranged outside the clean chamber (20).

6. Apparatus (1) according to at least one of the preceding claims, **characterised in that** the second blow mould carrier part (6b) is pivotable relative to a predefined pivot axis.

7. Apparatus (1) according to claim 4, **characterised in that** the first blow mould carrier part (6a) is pivotable through a first predefined pivot angle and the second blow mould carrier part (6b) is pivotable through a second predefined pivot angle, and the second pivot angle is larger than the first pivot angle.

8. Apparatus according to at least one of the preceding claims, **characterised in that** a pivoting shaft (90) which defines the pivot axis (X) extends through a wall and the movements of the pivoting shaft (90) are sealed off by means of a sealing device (98).

9. Apparatus (1) according to at least one of the preceding claims, **characterised in that** the coupling device (70) comprises a lever (72) for pivoting the blow mould carrier part relative to the first pivot axis (X).

10. Apparatus (1) according to at least one of the preceding claims, **characterised in that** the coupling device (70) comprises a lever arm (74) which is arranged on a pivoting shaft, which defines the pivot axis (X), in a manner such as to rotate therewith and is arranged in a manner articulated to a further pivoting arm (76).

11. Method for transforming plastic preforms into plastic containers, wherein the plastic preform is transformed into the plastic container in a blow moulding station arranged on a movable carrier, and wherein the blow moulding station comprises a first blow mould carrier part (6a), which is pivotable relative to a first pivot axis, and a second blow mould carrier part (6b), and wherein the first blow mould carrier part (6a) and the second blow mould carrier part (6b) are locked with respect to one another by means of a lock mechanism (80), and wherein, in order to lock the blow mould carrier parts (6a, 6b), a first lock element (82) carries out a movement relative to a second axis (X), **characterised in that** the second axis (X), during the movement of the first lock element (82), moves with respect to the carrier (2) in a direction perpendicular to the second axis (X).

12. Method according to claim 11, **characterised in that** the first blow mould carrier part (6a) and the second blow mould carrier part (6b), during a process of opening the blow moulding station, reach their respective open positions at different points in time.

## Revendications

1. Installation (1) pour la transformation de préformes en matière plastique (10) en récipients en matière plastique (10a), comprenant au moins une station de soufflage (8) montée sur un support mobile (2), où ladite station de soufflage (8) comporte un support (6) de moule de soufflage pour le maintien d'un moule de soufflage (4a, 4b), et où ledit support (6) de moule de soufflage comporte une première partie (6a) de support de moule de soufflage et une deuxième partie (6b) de support de moule de soufflage, laquelle est déplaçable relativement à la première partie (6a) de support de moule de soufflage par rapport à un premier axe de pivotement (Y) défini pour ouvrir et fermer le moule de soufflage (4a, 4b), où la station de soufflage (8) comprend en outre un mécanisme de verrouillage (80) pour verrouiller la première partie (6a) de support de moule de soufflage par rapport à la deuxième partie (6b) de support de moule de soufflage, et où le mécanisme de verrouillage (80) comporte un premier élément de verrouillage (82) disposé au moins de manière indirecte sur la première partie (6a) de support de moule de soufflage et un deuxième élément de verrouillage (84) disposé sur la deuxième partie (6b) de support de moule de soufflage, les éléments de verrouillage (82, 84) coopérant en état de verrouillage des parties (6a, 6b) de support de moule de soufflage, au moins le premier élément de verrouillage (82) étant déplaçable relativement au support (2) par rapport à un deuxième axe (X) défini,
**caractérisée en ce que**
le pivotement de la première partie (6a) de support de moule de soufflage et le déplacement du premier élément de verrouillage (82) sont couplés l'un à l'autre au moyen d'un dispositif d'accouplement (70), de telle manière que le deuxième axe (X) défini se déplace relativement au support (2) dans une direction perpendiculaire au deuxième axe (X), au moins temporairement pendant un déplacement du premier élément de verrouillage (82) par rapport au deuxième axe (X) défini.

2. Installation (1) selon la revendication 1, **caractérisée en ce que** ladite installation (1) comprend un compartiment stérile (20) isolé de l'environnement (U) par au moins une paroi, à l'intérieur duquel est déplacée la station de soufflage (8).

3. Installation (1) selon la revendication 1, **caractérisée en ce que**
le deuxième axe (X) défini est un axe de pivotement (X) et **en ce que** le premier élément de verrouillage (82) est pivotant par rapport audit deuxième axe de pivotement (X) préférentiellement fixe par rapport à la première partie (6a) de support de moule de soufflage.

4. Installation (1) selon la revendication 1, **caractérisée en ce que** le premier élément de verrouillage (82) est déplaçable le long de l'axe (X).

5. Installation (1) selon la revendication 2, **caractérisée en ce que**
le dispositif d'accouplement (70) est situé en dehors de l'espace stérile (20).

6. Installation (1) selon au moins une des revendications précédentes, **caractérisée en ce que**
la deuxième partie (6b) de support de moule de soufflage est pivotante par rapport à un axe de pivotement défini.

7. Installation (1) selon la revendication 4, **caractérisée en ce que**
la première partie (6a) de support de moule de soufflage est pivotante suivant un premier angle de pivotement défini, et la deuxième partie (6b) de support de moule de soufflage suivant un deuxième angle de pivotement défini, et **en ce que** le deuxième angle de pivotement est supérieur au premier angle de pivotement.

8. Installation (1) selon au moins une des revendications précédentes, **caractérisée en ce que**
un arbre pivotant (90) définissant l'axe de pivotement (X) s'étend au travers d'une paroi, et **en ce que** les mouvements de l'arbre pivotant (90) sont isolés au moyen d'un dispositif d'étanchéité (98).

9. Installation (1) selon au moins une des revendications précédentes, **caractérisée en ce que**
le dispositif d'accouplement (70) comporte un levier (72) pour le pivotement de la partie de support de moule de soufflage par rapport au premier axe de pivotement (X).

10. Installation (1) selon au moins une des revendications précédentes, **caractérisée en ce que**
le dispositif d'accouplement (70) comporte un bras de levier (74) monté fixement avec un arbre pivotant définissant l'axe de pivotement (X), lequel est articulé avec un autre bras pivotant (76).

11. Procédé de transformation de préformes en matière plastique en récipients en matière plastique, où la préforme en matière plastique est transformée en récipient en matière plastique dans une station de soufflage montée sur un support mobile, et où la station de soufflage comporte une première partie (6a) de support de moule de soufflage pivotante par rapport à un premier axe de pivotement et une deuxième partie (6b) de support de moule de soufflage, et où la première (6a) et la deuxième (6b) parties de support de moule de soufflage sont verrouillées entre elles au moyen d'un mécanisme de verrouillage (80), et où un premier élément de verrouillage (82) exécute un déplacement relativement à un deuxième axe (X) pour le verrouillage des parties (6a, 6b) de support de moule de soufflage,
**caractérisé en ce que**
le deuxième axe (X) se déplace relativement au support (2) dans une direction perpendiculaire au deuxième axe (X) pendant le déplacement du premier élément de verrouillage (82).

12. Procédé selon la revendication 11, **caractérisé en ce que**
la première (6a) et la deuxième (6b) parties de support de moule de soufflage atteignent chacune leur position d'ouverture respective à des moments différents pendant un processus d'ouverture de la station de soufflage.
